# EUROPEAN PATENT APPLICATION

(11) **EP 1 253 798 A2**
(43) Date of publication of application: **30.10.2002**
(21) Application number: 02009229.2
(22) Date of filing: 25.04.2002
(51) Int. Cl.: H04Q 7/38

(54) **Radio communication terminal and radio communication system**

(30) Priority: 26.04.2001 JP 2001129783
(71) Applicant: Kabushiki Kaisha Toshiba, Tokyo 105-8001 (JP)
(72) Inventor: Tsuchihashi, Atsushi, Intell. Property Division, Tokyo 105-8001 (JP)
(74) Representative: HOFFMANN - EITLE

(57) **Abstract**

A radio communication terminal receives from a base station area identification information identifying a current position area. A storing unit (1-3) stores with a corresponding relationship a first emergency call number used for issuing an emergency call in a first area and a second emergency call number used for issuing an emergency call in a second area. A converting unit (1-6) converts on the basis of the contents of the storing unit (1-3) the second emergency call number to the first emergency call number when it is determined, on the basis of the area identification information, that the terminal is in the first area, and when in the first area, it is determined that the emergency call in the second area is to be issued.

## Description

The present invention relates to a radio communication terminal and a radio communication system.

Currently, in a third generation radio communication system, universal specifications are enacted, and the radio communication terminal bodies, the users and the using countries use the radio communication system in arbitrary states, respectively. In this case, it is thought that there are many cases in which, for example, a user uses a radio communication terminal contracted and used in country A, or the user attaches an external storage medium (a memory, an IC card, or the like) which stores user information onto a radio communication terminal and uses it in country B in which it cannot be used in country A.

In this case, for example, even if in an emergency situation, there is the need for the user to dial an emergency call number which is assigned in the country which the user has contracted and can use. The psychological state of the user and the difference in mother tongues and the like are not considered, which is inconvenient for the user.

As described above, in the conventional radio communication system, the usage environment such as the user and the using country of the radio communication terminal and the like, and conditions such as the mother tongue of the user and the like, are not considered in, for example, emergency situations. There has been the problem that inconveniences arise for the user.

Accordingly, the object of the present invention is to provide a radio communication terminal and a radio communication system which can provide services such that communication to a predetermined facility can be certainly carried out and the situation of the user is considered, at the time of an emergency or when a special number service is received.

In order to achieve the above-described object, according to a first aspect of the present invention, there is provided a radio communication terminal comprising:
a receiving unit which receives, from a base station, area identification information identifying a current position area;
a storing unit which stores with a corresponding relationship a first emergency call number used for issuing an emergency call in a first area and a second emergency call number used for issuing an emergency call in a second area; and
a converting unit which, on the basis of the contents of the storing unit, converts the second emergency call number to the first emergency call number when it is determined, on the basis of the area identification information from the receiving unit, that the terminal is in the first area, and when in the first area, it is determined that the emergency call in the second area is to be issued.

Further, according to a second aspect of the present invention, there is provided a radio communication system comprising:
a radio communication terminal including:
   a receiving unit which receives, from a base station, area identification information identifying a current position area;
   a storing unit which stores with a corresponding relationship a first emergency call number used for issuing an emergency call in a first area and a second emergency call number used for issuing an emergency call in a second area;
   a converting unit which, on the basis of the contents of the storing unit, converts the second emergency call number to the first emergency call number when it is determined, on the basis of the area identification information from the receiving unit, that the terminal is in the first area, and when in the first area, it is determined that the emergency call in the second area is to be issued; and
   a connecting apparatus which analyzes information relating to a language used in the second area, which is received from the radio communication terminal, and carries out a specific service on the basis of results of the analysis.

Further, according to a third aspect of the present invention, there is provided a radio communication terminal comprising:
a receiving unit which receives, from a base station, area identification information identifying a current position area;
a storing unit which stores with a corresponding relationship a first telephone number used for carrying out a specific service in a first area and a second telephone number used for carrying out a specific services in a second area; and
a converting unit which, on the basis of the contents of the storing unit, converts the second telephone number to the first telephone number when it is determined, on the basis of the area identification information from the receiving unit, that the terminal is in the first area, and when in the first area, it is determined that the second telephone number used for carrying out a specific service in a second area is to be issued.

Further, according to a fourth aspect of the present invention, there is provided a radio communication method using preset information including a first emergency call number used for issuing an emergency call in a first area and a second emergency call number having a corresponding relationship with the first emergency call number and used for issuing an emergency call in a second area, comprising:
receiving from a base station area identification information identifying a current position area; and
converting on the basis of the preset information the second emergency call number to the first emergency call number when it is determined, on the basis of the received area identification information, that
   a terminal is in the first area, and when in the first area, it is determined that the emergency call in the second area is to be issued.

Further, according to a fifth aspect of the present invention, there is provided a radio communication method using preset information including a first telephone number used for carrying out a specific service in a first area and a second telephone number having a corresponding relationship with the first telephone number and used for carrying out a specific services in a second area, comprising:
receiving from a base station area identification information identifying a current position area; and
converting on the basis of the preset information the second telephone number to the first telephone number when it is determined, on the basis of the received area identification information, that a terminal is in the first area, and when in the first area, it is determined that the emergency call in the second area is to be issued.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a diagram showing a configuration of a radio communication terminal 1-14 according to an embodiment of the present invention.
FIGS. 2A, 2B and 2C are diagrams showing information that the radio communication terminal 1-14 of the present invention holds.
FIG. 3 is a flowchart for explaining details of a country code reading flow.
FIGS. 4A and 4B are flowcharts for explaining details of an emergency call dialing flow of the radio communication terminal 1-14.
FIG. 5 is a diagram showing a configuration of an information element of call setting used for emergency calling.
FIG. 6 is a diagram showing a configuration of a radio communication system including an exchange apparatus which provides the present service.

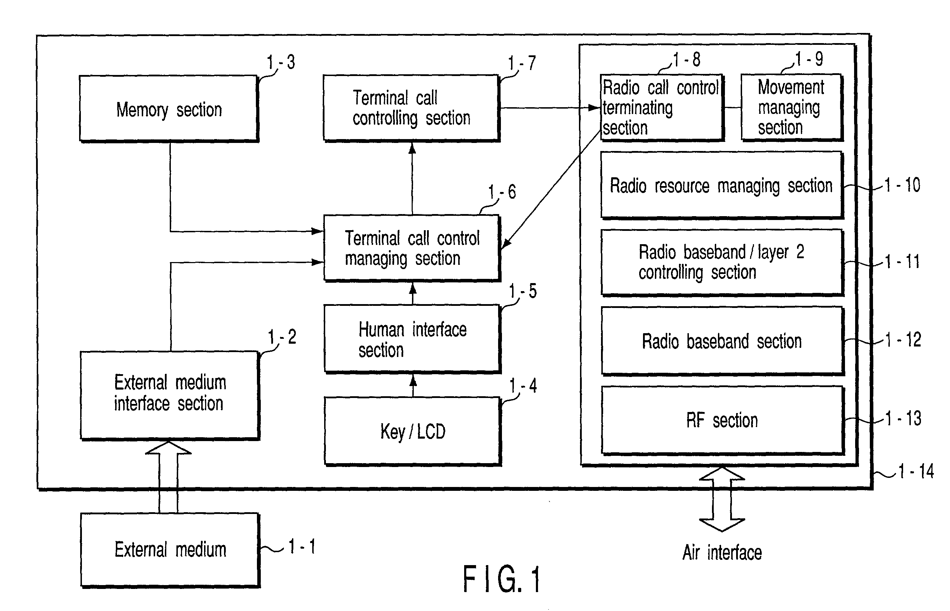

FIG. 1 is a diagram showing a configuration of a radio communication terminal according to an embodiment of the present invention. 1-1 is an external medium such as a memory IC card or the like, 1-2 is an external medium interface section, 1-3 is a memory section, 1-4 is a key/LCD, 1-5 is a human interface section, 1-6 is a terminal call control managing section, 107 is a terminal call controlling section, 1-8 is a radio call control terminating section, 1-9 is a movement managing section, 1-10 is a radio resource managing section, 1-11 is a radio baseband/layer 2 controlling section, 1-12 is a radio baseband section, 1-13 is an RF section, and 1-14 is a radio communication terminal.

When the power is turned on, the radio communication terminal 1-14 generally carries out searching a base station of the system to which the terminal itself belongs, and at the time of completing the searching, various news information can be received from the base station. The news information is, via an air interface, transferred to the movement controlling section 1-9 through the RF section 1-13, the radio baseband section 1-12, the radio baseband/layer 2 controlling section 1-11, and the radio resource managing section 1-10.

At this time, the staying country code can be obtained from the news information from the base station. The received country code is informed from the movement managing section 1-9 to the terminal call control managing section 1-6 via the radio call control terminating section 1-8.

Further, when the power is turned on, verification of the connecting state of the external medium 1-1 is carried out via the external medium interface section 2-1. When the connecting of the external medium 1-1 is verified, reading of a user's country code and an emergency call (police, fire, ambulance, and the like) number stored in the external medium 1-1 is carried out. The respective read information is stored in the memory section 1-3. Further, when the connecting of the external medium 1-1 is not verified when the power is turned on, a country code and an emergency call number which are inputted via the key/LCD 1-4 and the human interface section 1-5, or the preset same data is stored in the memory section 1-3.

The terminal call control managing section 1-6 carries out comparison of a base station set country code received from the base station in this way, and the above-described user's country code and emergency call number, and when they do not coincide, an identification flag thereof is set on the memory section 1-3.

With the terminal user carrying out dialing operation via the key/LCD 1-4, issuing of an emergency call is carried out. The dialed number is transferred via the human interface section 1-5 to the terminal call control managing section 1-6. The terminal call control managing section 1-6 carries out analysis of the inputted dialed number, and carries out a determination as to whether or not it is an emergency call. At this time, the terminal call control managing section 1-6 carries out a determination as to whether the emergency call corresponds to an emergency call number in the base station set country, or whether the emergency call corresponds to an emergency call number in the terminal user's country. When the emergency call corresponds to an emergency call number in the base station set country, the terminal call control managing section 1-6 adds the user's mother tongue information to the inputted emergency call number, and gives a calling instruction to the terminal call controlling section 1-7.

Further, when the result of the determination is that it is an emergency call number in the user's country, after the inputted emergency call number is converted to the corresponding emergency call number in the base station country, the terminal call control managing section 1-6 adds the user's mother tongue information, and gives a calling instruction to the terminal call controlling section 1-7.

In accordance with the above-described operations, the user always can carry out calling by an emergency call number in the terminal user's country in an emergency situation without being aware of the emergency call number in his/her country and the other country. In this way, at the time of an emergency, more convenient service can be provided.

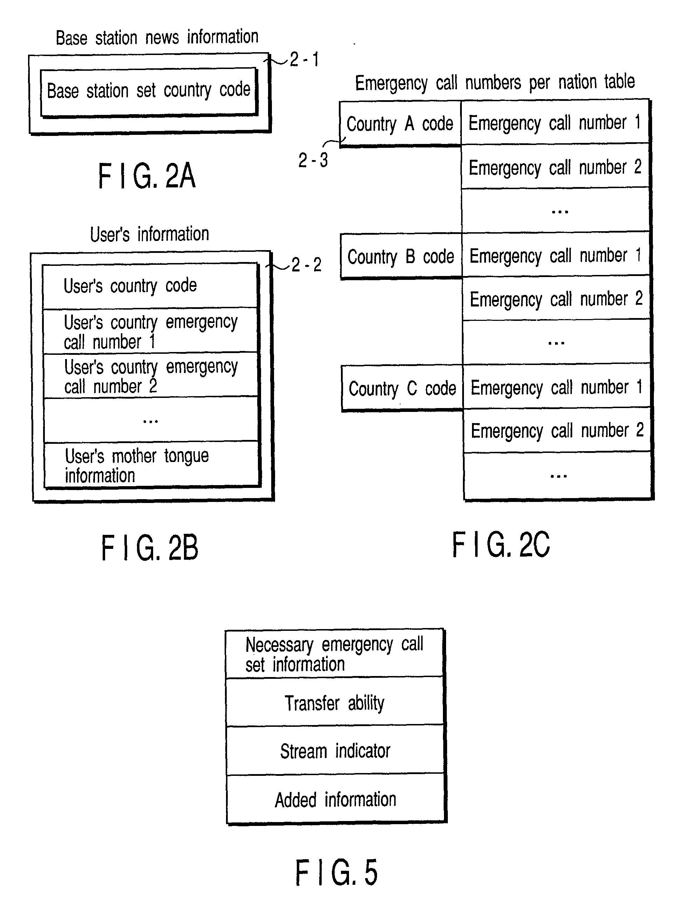

FIGS. 2A, 2B and 2C are diagrams showing information that the radio communication terminal 1-14 of the present invention holds. 2-1 (FIG. 2A) is a base station set country code informed from the base station, and after the power is turned on, is stored in the memory section 1-3 immediately after the radio communication terminal 1-14 is set in a state in which it can receive news information from the base station. 2-2 (FIG. 2B) is user's information inputted or preset via the external medium 1-1 or the key/LCD 1-4. The user's information is formed from a user's country code, emergency call numbers in the user's country (1, 2, ···), and the user's mother tongue information. A plurality of emergency call numbers can be set in accordance with the situations.

2-3 (FIG. 2C) is a table in which emergency call numbers per nation for base station set countries are registered. A plurality of emergency call numbers used by the codes of the respective countries are preset. With the emergency call numbers in the respective base station set countries and the emergency call number in the user's country being stored with a corresponding relationship to each other, the emergency call number in the user's country can be converted to a emergency call number in the base station set country at the time of issuing an emergency call.

With the radio communication terminal 1-14 having the above-described information, the emergency call number inputted by the user can be converted to an emergency call number in the base station set country, and a user's mother tongue information can be added to the converted emergency call number.

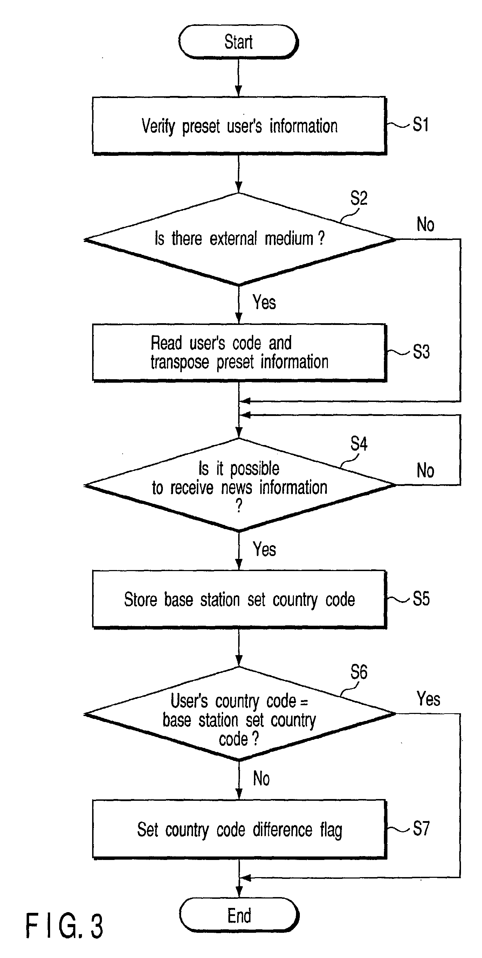

FIG. 3 is a flowchart for explaining details of a country code reading flow. Firstly, when the power is turned on, the radio communication terminal 1-14 carries out verification of the preset user's information (step S1). Although the information can be reset by using the key/LCD 1-4 provided in the radio communication terminal 1-14 or the like, the present embodiment will be described supposing that the information has been preset. Next, verification of the connecting of the external medium 1-1 is carried out (step S2), and if the external medium 1-1 is connected, reading of the user's country code from the external medium 1-1 is carried out, and transposition with the aforementioned preset information is carried out (step S3). On the other hand, if the external medium 1-1 is not connected, the preset information is used as is (step S3).

At the time of completing the base station searching operation of the radio communication terminal 1-14, it is determined whether or not there is a state in which news information from the base station found by the searching can be received (step S4). When there is a receivable state, the base station set country code is received and stored (step S5). On the other hand, when the news information cannot be received, the searching operation is repeated until news information can be received. At the time of carrying out receiving of the user's country code and the base station set country code, it is determined whether or not these two codes are the same (step S6). When the two codes do not coincide, due to a country code difference flag being set, it is shown that there is the possibility that the emergency call number will be converted at the time of issuing an emergency call.

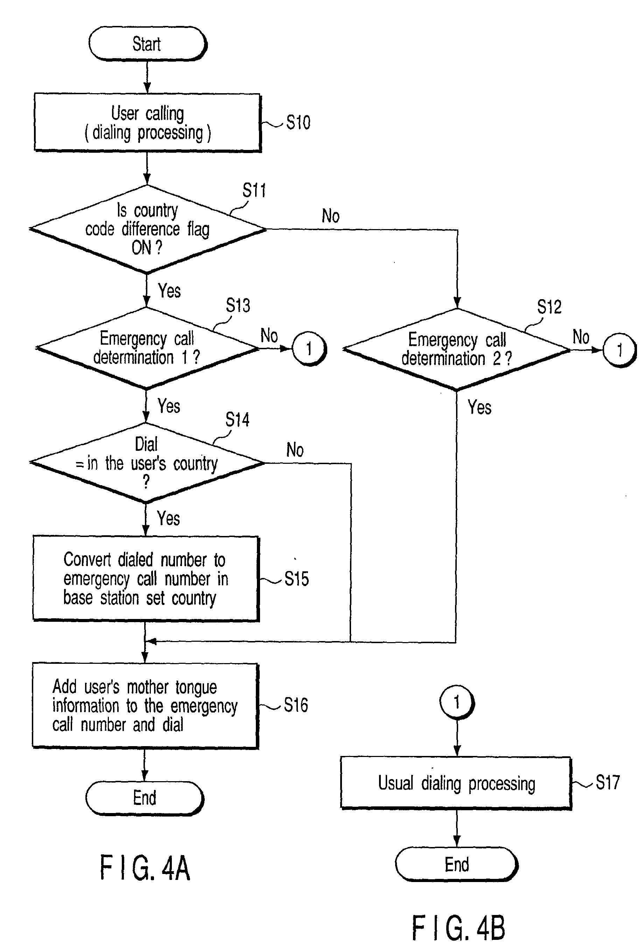

FIGS. 4A and 4B are flowcharts for explaining details of an emergency call dialing flow of the radio communication terminal 1-14. When a dialing processing (step S10) is carried out by the user, checking of the aforementioned country code difference flag is carried out, and whether or not there is a difference between the user's country code and the base station set country code is determined by whether the country code difference flag is ON or not (step S11). When the country code difference flag is ON, the emergency call number in the user's country and the emergency call number in the base station set country are referred to for emergency call determination (step S13). Further, when the country code difference flag is OFF in step S11 and the emergency call number in the user's country is not used, only the emergency call number in the base station set country is used to determine whether or not it is an emergency call (step S12). In any case, when it is determined to not be an emergency, the usual dialing processing is carried out (step S17).

On the other hand, when it is determined to be an emergency call in step S13, after the user's mother tongue information included in the user's information in FIG. 2B is added to the emergency call number, issuing process of the emergency call is carried out. At this time, whether or not the dialed number is a number in the user's country is checked (step S14), and when it is an emergency call number in the user's country, the dialed number is converted to an emergency call number in the base station set country (step S15). The user's mother tongue information is added to the converted emergency call number, and dialing processing is carried out (step S16).

Further, when it is determined to be an emergency call in step S12, after the user's mother tongue information is added without converting the dialed number, dialing processing is carried out (step S16).

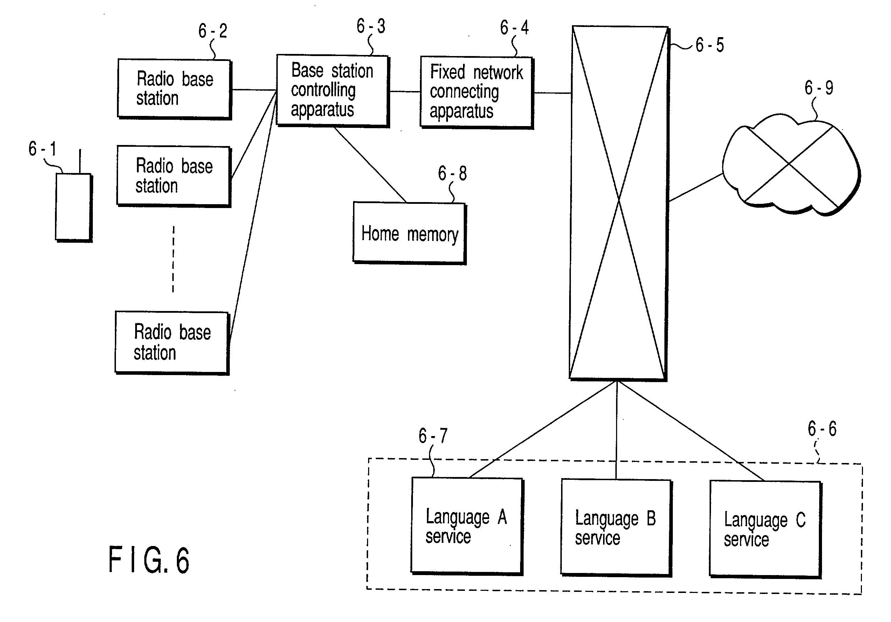

Note that the aforementioned user's mother tongue information is set in a call setting message as shown in FIG. 5 needed at the time of issuing an emergency call, and is transmitted to the exchange apparatus. The exchange apparatus, by analyzing the user's mother tongue information set in the call setting message, can carry out a service such as carrying out switching of the call connecting destinations, or carrying out connecting to a specific operator, or the like. Hereinafter, such a service will be described in detail.

FIG. 6 is a diagram showing a configuration of a radio communication system including an exchange apparatus providing the present service. 6-1 denotes a radio communication terminal, 6-2 denotes a radio base station, 6-3 denotes a base station controlling apparatus, 6-4 denotes a fixed network connecting apparatus, 6-5 denotes a fixed network, 6-6 denotes a special number (time signal, weather forecast) service center or emergency call contact destination (police, fire, and the like), and 6-7 denotes a facility or an operator providing respective language services provided at each facility. 6-8 is a home memory for carrying out movement management of the radio communication terminal. Further, the fixed network 6-5 is connected to another communication network 6-9 and can communicate with the other communication network.

In the above-described configuration, when issuing of an emergency call is carried out from the radio communication terminal 6-1, the mother tongue information added to a calling request via the radio base station 6-2 is transmitted to the base station controlling apparatus 6-3. The base station controlling apparatus 6-3 changes information such as a position registration information and the like on the basis of the dialed number in the calling request received from the radio base station 6-2, and reads out subscriber information in the home memory and carries out determination of the validity of the subscriber or the like.

When the validity of the subscriber is verified, selection of a radio channel with respect to the radio base station 6-2 is carried out from the base station controlling apparatus 6-3. In the case of issuing an emergency call, selection of a radio channel is carried out regardless of the validity of the subscriber.

When securing of a radio channel is completed by the radio base station 6-2, the base station controlling apparatus 6-3 connects a line to the fixed network connecting apparatus 6-4 in order to carry out line connecting to the calling destination. At the fixed network connecting apparatus 6-4, selection of the partner carrying out a registered service is carried out via the fixed network 6-5 by using the calling destination information and the added mother tongue information, and connecting of the line is carried out with respect to a service facility in each partner destination. FIG. 6 shows an example in which the special number service center 6-6 provides language A service, language B service, language C service 6-7.

In accordance with the above-described embodiment, even if the user carries out calling by using an emergency call number in the user's country in a situation in which the user carries out calling of an emergency call in another country, because the emergency call number in the user's country is automatically converted to an emergency call number in the user's staying country and the calling is carried out, communication to a predetermined facility can be certainly carried out.

Further, even if the user carries out calling by using a special number service number in the user's country in a situation in which the user carries out calling of a special number service number in another country, because the special number service number in the user's country is automatically converted to the special number service number in the user's staying country and the calling is carried out, communication to a predetermined facility providing the service can be certainly carried out.

Moreover, with the user's mother tongue information being added to an emergency call number at the time of issuing an emergency call or a special number service number, because the user can talk by using the user's mother tongue provided at the receiving facility regardless of the usage country, a communication system considering the situation of the user can be provided.

In accordance with the present invention, even if the user carries out calling by using an emergency call number in the user's country in a situation in which the user carries out calling of an emergency call in another country, because the emergency call number in the user's country is automatically converted to the emergency call number in the user's staying country and the calling is carried out, communication to a predetermined facility can be certainly carried out.

Further, even if the user carries out calling by using a special number service number in the user's country in a situation in which the user carries out calling of the special number service number in another country, because the special number service number in the user's country is automatically converted to the special number service number in the user's staying country and the calling is carried out, communication to the facility providing the service can be certainly carried out.

Moreover, with the user's mother tongue information being added to an emergency call number at the time of calling an emergency call or a special number service number, because the user can talk by using the user's mother tongue provided at the receiving facility regardless of the usage country, a communication system considering the situation of the user can be provided.

## Claims

1. A radio communication terminal **characterized by** comprising:
a receiving unit (1-13) which receives, from a base station, area identification information identifying a current position area;
a storing unit (1-3) which stores with a corresponding relationship a first emergency call number used for issuing an emergency call in a first area and a second emergency call number used for issuing an emergency call in a second area; and
a converting unit (1-6) which, on the basis of the contents of the storing unit (1-3), converts the second emergency call number to the first emergency call number when it is determined, on the basis of the area identification information from the receiving unit (1-13), that the terminal is in the first area, and when in the first area, it is determined that the emergency call in the second area is to be issued.

2. A radio communication terminal according to claim 1, **characterized by** further comprising:
a detecting unit (1-2) which detects connection of a storing medium (1-1) externally connected; and
a reading unit (1-6) which reads out information stored in the storing medium (1-1) when the detecting unit (1-6) detects the connection of the storing medium (1-1).

3. A radio communication terminal according to claim 1, **characterized by** further comprising an adding unit (1-6) which adds information relating to a language used in the second area, when the second emergency call is issued.

4. A radio communication system **characterized by** comprising:
a radio communication terminal (6-1) including:
a receiving unit (1-13) which receives, from a base station, area identification information identifying a current position area;
a storing unit (1-3) which stores with a corresponding relationship a first emergency call number used for issuing an emergency call in a first area and a second emergency call number used for issuing an emergency call in a second area;
a converting unit (1-6) which, on the basis of the contents of the storing unit (1-3), converts the second emergency call number to the first emergency call number when it is determined, on the basis of the area identification information from the receiving unit (1-13), that the terminal is in the first area, and when in the first area, it is determined that the emergency call in the second area is to be issued; and
a connecting apparatus (6-4) which analyzes information relating to a language used in the second area, which is received from the radio communication terminal, and carries out a specific service on the basis of results of the analysis.

5. A radio communication terminal **characterized by** comprising:
a receiving unit (1-13) which receives, from a base station, area identification information identifying a current position area;
a storing unit (1-3) which stores with a corresponding relationship a first telephone number used for carrying out a specific service in a first area and a second telephone number used for carrying out a specific services in a second area; and
a converting unit (1-6) which, on the basis of the contents of the storing unit (1-3), converts the second telephone number to the first telephone number when it is determined, on the basis of the area identification information from the receiving unit (1-13), that the terminal is in the first area, and when in the first area, it is determined that the second telephone number used for carrying out a specific service in a second area is to be issued.

6. A radio communication terminal according to claim 5, **characterized by** further comprising:
a detecting unit (1-2) which detects connection of a storing medium (1-1) externally connected; and
a reading unit (1-6) which reads out information stored in the storing medium (1-1) when the detecting unit detects the connection of the storing medium (1-1).

7. A radio communication terminal according to claim 5, **characterized by** further comprising an adding unit (1-6) which adds information relating to a language used in the second area, when the specific service in the second area is carried out.

8. A radio communication method using preset information including a first emergency call number used for issuing an emergency call in a first area and a second emergency call number having a corresponding relationship with the first emergency call number and used for issuing an emergency call in a second area, **characterized by** comprising:
receiving from a base station area identification information identifying a current position area; and
converting on the basis of the preset information the second emergency call number to the first emergency call number when it is determined, on the basis of the received area identification information, that a terminal is in the first area, and when in the first area, it is determined that the emergency call in the second area is to be issued.

9. A radio communication method according to claim 8, **characterized by** further comprising:
detecting connection of a storing medium (1-1) externally connected; and
a reading out information stored in the storing medium (1-1) when the connection of the storing medium (1-1) is detected.

10. A radio communication method according to claim 8, **characterized by** further comprising adding information relating to a language used in the second area, when the second emergency call is issued.

11. A radio communication method using preset information including a first telephone number used for carrying out a specific service in a first area and a second telephone number having a corresponding relationship with the first telephone number and used for carrying out a specific services in a second area, **characterized by** comprising:
receiving from a base station area identification information identifying a current position area; and
converting on the basis of the preset information the second telephone number to the first telephone number when it is determined, on the basis of the received area identification information, that a terminal is in the first area, and when in the first area, it is determined that the emergency call in the second area is to be issued.

12. A radio communication method according to claim 11, **characterized by** further comprising:
detecting connection of a storing medium (1-1) externally connected; and
a reading out information stored in the storing medium (1-1) when the connection of the storing medium (1-1) is detected.

13. A radio communication method according to claim 11, **characterized by** further comprising adding information relating to a language used in the second area, when the second emergency call is issued.
